# EUROPÄISCHE PATENTSCHRIFT

(11) **EP 1 284 379 B1**
(45) Veröffentlichungstag und Bekanntmachung des Hinweises auf die Patenterteilung: **01.09.2004**
(21) Anmeldenummer: 02013589.3
(22) Anmeldetag: 20.06.2002
(51) Int. Cl.: F16K 11/07, F16J 15/16

(54) **Dichtungsanordnung für ein pneumatisches Wegeventil**
Seal assembly for a pneumatica flow control valve
Assemblage d'étanchéité pour une soupape directionelle

(30) Priorität: 11.08.2001 DE 10139632
(43) Veröffentlichungstag der Anmeldung: 19.02.2003
(73) Patentinhaber: ROBERT BOSCH GMBH, 70442 Stuttgart (DE)
(72) Erfinder: Francoz, Emile, 73410 Cessens (FR)
(74) Vertreter: Maiwald Patentanwalts GmbH

(56) Entgegenhaltungen:
- EP-A- 0 584 480
- EP-A- 0 866 252
- DE-A- 2 944 706
- DE-A- 3 114 129
- DE-A- 3 442 463
- DE-A- 3 641 383
- DE-A- 19 706 059
- GB-A- 1 142 857
- US-A- 5 171 025
- US-A- 5 261 677

## Beschreibung

### Stand der Technik

Die Erfindung geht aus von einer Dichtungsanordnung für ein pneumatisches Wegeventil nach der im Oberbegriff des Anspruchs 1 näher angegebenen Gattung. Eine gattungsgemäßer Dichtungsanordnung ist dem Dokument GB-A- 1 142 857 zu entnehmen.

Aus der DE 197 06 059 A1 ist bereits ein pneumatisches Wegeventil mit einer Dichtungsanordnung bekannt, die als sogenanntes außendichtendes System ausgeführt ist. Dieses Wegeventil besteht aus einem Gehäuse mit Zulauf-, Rücklaufund Arbeitskanälen, in dem ein Ventilschieber längsbeweglich in einer Schieberbohrung geführt ist. Dieser Ventilschieber weist zylindrische Kolbenabschnitte und dazwischenliegende, hülsenförmige Koppeln kleineren Außendurchmessers auf. In Nuten der Kolbenabschnitte sind Dichtungskörper angeordnet, die in Wechselwirkung mit der Wandlung der Schieberbohrung gegebenenfalls eine gegenseitige Abdichtung der Kanäle erlauben. In der Praxis kommt es insbesondere bei einem langsamen Umschalten eines solches Wegeventils unter maximaler Luftströmung vor, dass die Dichtkörper aus ihrer Nut herausgedrückt und im weiteren Verlauf der Bewegung des Ventilschiebers an gehäuseseitigen Kanten abgequetscht werden. Die dabei verursachten Beschädigungen an den Dichtkörpern können einen Totalausfall des Wegeventils verursachen. Das Herausdrücken aus der Nut wird ausgelöst durch ein abruptes Abdichtung einer Druckmittelverbindung zwischen zwei Kanälen, verbunden mit einer dabei erfolgenden schlagartigen Druckerhöhung an einer Flanke der Dichtkörper. Zur Vermeidung dieses Effekts sind am bekannten Wegeventil speziell geformte Dichtkörper vorgesehen. Diese halten kurz vor dem endgültigen Abdichten der Druckmittelverbindung zwischen zwei Kanälen Ausnehmungen frei, über die ein weitgehender Druckausgleich erfolgen kann. Bei einem solchen außendichtenden System ist der Aufbau des Ventilschiebers relativ aufwendig, da eine Vielzahl von Ringnuten zur Aufnahme der Dichtkörper vorzusehen ist. Die Dichtungsmontage erfolgt manuell. Zudem muss die Schieberbohrung mit hoher Oberflächengüte hergestellt werden, um optimale Betriebsbedingungen für die Dichtungen zu gewährleisten. Alle diese Maßnahmen führen dazu, dass sie ein Wegeventil mit einer derartigen Dichtungsanordnung verteuern.

Aus der DE 100 076 87 A1 ist ein pneumatisches Wegeventil mit einer gattungsbildenden Dichtungsanordnung bekannt. Bei diesem Wegeventil weist das Gehäuse in seinen die Schieberbohrung begrenzenden Wandungen Gehäusespalten auf, in die die mit dem Steuerschieber zusammenwirkenden Dichtungsringe eingesetzt sind. Dabei sind die Dichtungsringe in radialer Richtung durch gehäusefeste Stege gehalten und in axialer Richtung durch hohlkastenförmige Einschubkörper fixiert, die radial zum Steuerschieber zwischen den gehäusefesten Stegen in das Gehäuse eingebaut sind. Speziell ausgebildete Dichtringe mit der Außenkontur einer Acht, bei der ein Außenringteil über einen Steg mit einem Innenringteil verbunden ist, sind in den Gehäusespalten angeordnet. Zudem sind Maßnahmen an den Dichtringen vorgesehen, um beim Umschalten des Steuerschiebers ein Herausdrücken der Dichtringe bzw. deren Beschädigung zu vermeiden. Obwohl mit dieser Bauweise bereits gute Ergebnisse erzielbar sind, können die im Gehäuse radial festgelegten Dichtringe dazu führen, dass bei unrunden oder bei ungeraden Steuerschiebern bzw. bei schlechter konzentrischer Ausrichtung des Gehäuses, also bei ungenauer Bauweise, die Anpressung der Dichtringe am Steuerschieber nicht überall gleichmäßig längs des Umfangs verteilt ist und somit sich eine erhöhte Reibung ausbildet. Gerade bei schnell und leicht schaltenden Ventilen muss daher ein erhöhter Fertigungsaufwand getrieben werden. Auch kann bei dieser Bauart die Abdichtung nach außen nicht optimal erfüllt werden.

### Vorteile der Erfindung

Die erfindungsmäßige Dichtungsanordnung für ein pneumatisches Wegeventil mit den kennzeichnenden Merkmalen des Hauptanspruchs hat demgegenüber den Vorteil, dass sie ein kostengünstig bauendes, innendichtendes System ermöglicht, das bei einer einfachen Montage auch eine sichere Abdichtung gewährleistet, wobei ein Herausdrücken bzw. Heraussaugen der Dichtringe aus dem Gehäusespalt weitgehend vermieden werden kann. Dabei läßt sich durch die Dichtlippen in besonders einfacher Weise eine sichere Abdichtung erreichen. Zudem eignet sich die Dichtungsanordnung für ein leicht und schnell schaltendes pneumatisches Wegeventil für hohe Lebensdauer.

Durch die in den Unteransprüchen aufgeführten Maßnahmen sind vorteilhafte Weiterbildungen und Verbesserungen der im Hauptanspruch angegebenen Dichtungsanordnung möglich. Besonders vorteilhaft ist eine Ausbildung nach Anspruch 2, wenn die Dichtungsanordnung in dem Gehäuse selbstzentrierend angeordnet wird, so dass auch Geradheitsfehler von Steuerschieber oder Gehäuse sich nicht störend auswirken.

Gerade bei Steuerschiebern mit nicht gerader Achse, beziehungsweise bei geringer Konzentrizität der einzelnen Kolbenabschnitte zueinander, kann sich die Dichtung selbstzentrierend so einstellen, dass an den Kolbenabschnitten längs des Umfangs stets eine gleichmäßige Anpressung auftritt, wodurch sich insgesamt die Reibung des Steuerschiebers im Gehäuse verringern läßt. Auch Fertigungsungenauigkeiten im Gehäuse lassen sich damit leichter ausgleichen. Die Dichtungsanordnung eignet sich daher besonders für Wegeventils, die leicht ansprechen, eine hohe Lebensdauer erreichen und kostengünstig bauen sollen. Besonders vorteilhaft ist ferner eine Ausbildung der Dichtungsanordnung nach Anspruch 3, wodurch sich der Dichtring mit Vorspannung in dem Gehäusespalt anordnen läßt, so dass er gegen Herausdrücken bzw. Heraussaugen bei Druckunterschieden während eines Schaltvorgangs besser gesichert ist. Weiterhin ist es vorteilhaft, die Dichtungsanordnung gemäss Anspruch 4 auszuführen, um den Luftein- bzw. Luftaustritt in den Gehäusespalt zu unterstützen und damit die Gefahr eines Herausdrückens der Dichtringe aus dem Gehäusespalt zu verringern. Weitere vorteilhafte Ausgestaltungen ergeben sich aus den übrigen Ansprüchen, der Beschreibung sowie der Zeichnung.

### Zeichnung

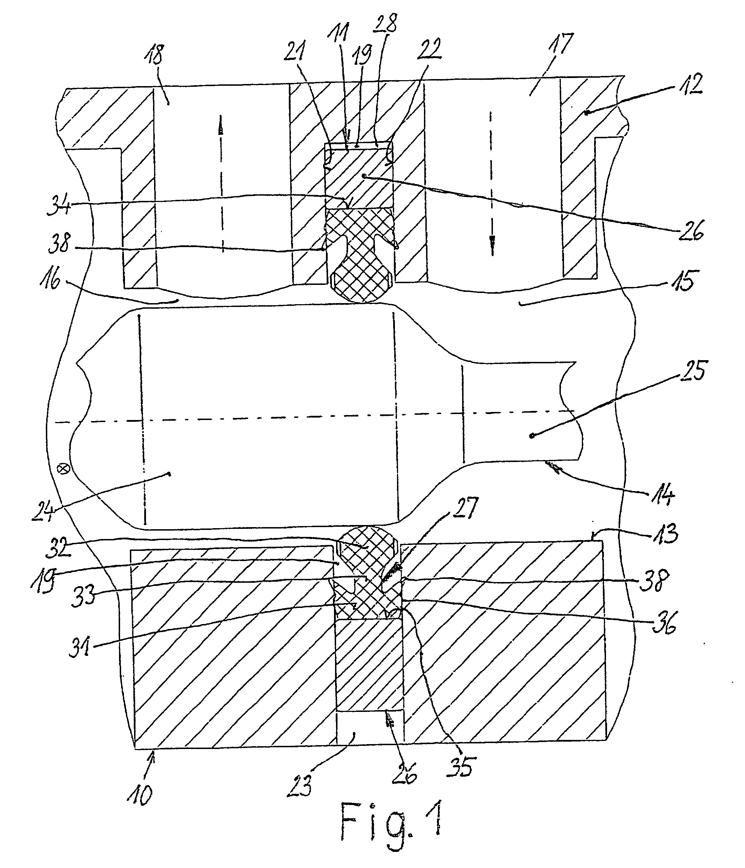

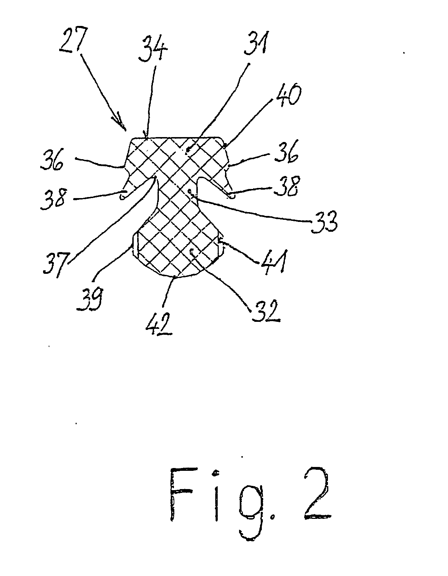

Ein Ausführungsbeispiel der Erfindung ist in der Zeichnung dargestellt und in der nachfolgenden Beschreibung näher erläutert. Es zeigen Figur 1 in stark vereinfachter Darstellung und in vergrößertem Maßstab einen Teilschnitt durch ein pneumatisches Wegeventil mit einer erfindungsgemäßen Dichtungsanordnung und Figur 2, als Einzelheit in vergrößertem Maßstab, einen Querschnitt durch den Dichtungsring nach Figur 1.

### Beschreibung des Ausführungsbeispiels

Die Figur 1 zeigt in vereinfachter und vergrößerter Form einen Längsschnitt durch einen Teil eines Wegeventils 10 mit der erfindungsgemäßen Dichtungsanordnung 11. Vom Wegeventil 10 ist dabei nur ein Teil dargestellt und dieser Teil insoweit erläutert, als zum Verständnis der Dichtungsanordnung 11 erforderlich ist.

Das Wegeventil 10 weist in einem Gehäuse 12 eine durchgehende Schieberbohrung 13 auf, in der ein längsbeweglicher Steuerschieber 14 gleitend und abgedichtet geführt ist. In der Schieberbohrung 13 ist eine erste Kammer 15 durch die Dichtungsanordnung 11 von einer zweiten Kammer 16 getrennt, wobei in die erste Kammer 15 ein Zulaufkanal 17 und in die zweite Kammer ein Ablaufkanal 18 mündet. In dem Gehäuse 12 verläuft zwischen den Kanälen 17, 18 ein Gehäusespalt 19, der die Schieberbohrung 13 durchdringt, von ebenen, zueinander parallelen Wänden 21, 22, begrenzt wird, und durch eine Öffnung 23 nach außen hin Verbindung hat. In diesem Gehäusespalt 19 ist durch die Öffnung 23 von außen her die quer zur Schieberbohrung 13 verlaufende Dichtungsanordnung 11 eingebaut. Vom Steuerschieber 14 ist in Figur 1 lediglich ein Kolbenabschnitt 24 mit einem angrenzenden, bolzenförmigen Stegteil dargestellt. In der dargestellten Lage des Steuerschiebers 14 durchdringt er mit seinem zylindrischen Kolbenabschnitt 24 die Dichtungsanordnung 11, wodurch die erste Kammer 15 von der zweiten Kammer 16 dicht abgesperrt ist.

Wie die Figur 1 näher zeigt, ist die Dichtungsanordnung 11 zweigliedrig aufgebaut. Die Dichtungsanordnung 11 besteht aus einem außenliegenden Haltering 26 und dem eigentlichen, im Haltering 26 angeordneten Dichtring 27. Der Haltering 26 besteht dabei aus einem formstabilen Material, wobei dies z.B. ein Metall oder ein formstabiler Kunststoff sein kann. Der Haltering 26 dient unter anderem dazu, den Dichtring 27 im Gehäuse 12 zu installieren. Um dies zu erreichen, wird der Dichtring 27, der aus einem geeignetem, relativ weichem Dichtungsmaterial besteht, in den Haltering 26 eingefügt, der auf diese Weise den Dichtring 27 in seiner kreisringförmigen Form hält, seine Handhabung dadurch vereinfacht und seine Installation erleichtert. Der Haltering 26 ist dabei in axialer Richtung des Steuerschiebers 25 so dick ausgeführt, dass er in dem Gehäusespalt 19 mit leichtem Spiel geführt ist, was zum Beispiel bei üblichen pneumatischen Wegeventilen 0,2 mm betragen kann. Zudem ist der Gehäusespalt 19 so groß ausgeführt, dass der Haltering 26 auch in radialer Richtung ein Spiel 28 aufweist. Der formstabile Haltering 26 ist somit im Gehäusespalt 19 in der radial zum Steuerschieber verlaufenden Ebene im Wesentlichen schwimmend geführt.

Wie die Figur 1 in Verbindung mit Figur 2 näher zeigen, wo der Dichtring 27 jeweils in unverformtem Zustand dargestellt ist, besteht der Dichtring 27 aus einem Außenringteil 31 und einem Innenringteil 32, die durch einen Ringsteg 33 miteinander verbunden sind. Der Dichtring 27 ist somit einteilig und massiv aufgebaut, wobei die beiden Ringteile 31 und 32 konzentrisch ineinander liegen. Das Außenringteil 31 weist dabei im Wesentlichen die Grundform eines gleichschenkligen Trapezes auf, dessen kurze, parallele Seite eine äußere Mantelfläche 34 bildet, mit welcher der Dichtring 27 an der zylindrischen Bohrung 35 des Haltering 26 anliegt. Die lange Seite des gleichschenkligen Trapezes erstreckt sich zwischen vorspringenden Rippen 36, deren Abstand voneinander etwas größer ist als der Abstand der Wände 21, 22 des Gehäusespalts 19, so dass der eingebaute Dichtring 27 im Gehäusespalt 19 unter einer gewissen Vorspannung steht. An dem Außenringteil 31 sind ferner auf der dem Innenringteil 32 zugewandten Seite, also von der langen Trapezseite aus, im Bereich zwischen den Rippen 36 und dem Grund 37 des Ringsteges 33 schräg nach außen ragende Dichtlippen 38 angeordnet. Diese Dichtlippen 38, deren freie Länge in etwa der Dicke des Ringsteges 33 entspricht, legen sich beim eingebauten Dichtring 27 an den Wänden 21 und 22 an und sorgen dabei für eine sichere Abdichtung nach außen. In Figur 1 sind diese Dichtlippen 38 einfachheitshalber in unverformten Zustand dargestellt, so dass deren Ausgangsform besser erkennbar wird. Die schrägen Schenkel des Trapezes, die in den Rippen 36 enden, bilden dabei Seitenflächen 40 am Dichtring 27. Der Innenringteil 32 hat eine im Wesentlichen runde Grundform und weist zueinander parallele abgeflachte Seitenwände 39 auf, die ebenfalls den Wänden 21 bzw. 22 im Gehäusespalt 19 gegenüberliegen. In diesen Seitenwänden 39 sind längs des Umfangs gleichmäßig verteilt radial verlaufende Durchlaßnuten 41 angeordnet, über welche bei eingebauter Dichtungsanordnung 11 ein druckausgleichender Druckmittelfluss in bzw. aus dem Gehäusespalt 19 stattfinden kann. Ferner ist an dem Innenringteil 32 und damit am Innendurchmesser des Dichtrings 27 eine gewölbte, glatte Kontaktzone 42 ausgebildet, deren Ausgestaltung vorzugsweise an das Material des Dichtrings 27 angepaßt wird. Wie die Figuren 1 und 2 zeigen, ist der Dichtring 27 symmetrisch zu seiner Mittelebene aufgebaut; zudem ist er vorzugsweise kreisringförmig ausgebildet.

Bei der Montage einer Dichtungsanordnung 11 in einem Wegeventil 10 wird so vorgegangen, dass der vorzugsweise aus elastischem Dichtungsmaterial bestehende Dichtring 27 in den formstabilen Haltering 26 eingesetzt wird. Dabei liegt der Dichtring 27 mit seiner kreiszylindrisch verlaufenden Mantelfläche 34 an der Wand der Bohrung 35 an. Der Dichtring 27 hält auf diese Weise seine Form, ist relativ einfach handhabbar und kann nun leichter installiert werden. Zu diesem Zweck wird die Dichtungsanordnung 11 aus Haltering 26 und Dichtring 27 über die seitliche Öffnung 23 radial in den Gehäusespalt 19 eingeführt, bis der Innendurchmesser des Dichtrings 27 in etwa konzentrisch zur Schieberbohrung 13 liegt. Danach erst wird der Steuerschieber 14 in die Schieberbohrung 13 in Längsrichtung eingebaut, wobei sich der Dichtring 27 automatisch zum jeweils zugeordneten Kolbenabschnitt 34 zentriert. Diese Selbstzentrierung ist deswegen möglich, weil der Haltering 26 mit einem leichten Spiel in dem Gehäusespalt 19 geführt ist und auch in radialer Richtung durch das Spiel 28 leicht beweglich ist.

Im Betrieb des pneumatischen Wegeventils 10 übernimmt die Dichtungsanordnung 11 einmal die Abdichtung zwischen den beiden Kammern 15 und 16, sowie darüber hinaus auch die Abdichtung nach außen hin über den Gehäusespalt 19. Bei der in Figur 1 gezeigten Stellung des Kolbenabschnitts 24, liegt der Dichtring 27 mit seiner abgerundeten, glatten und vorgespannten Kontaktzone 42 am Außendurchmesser des Schiebers an und gewährleistet die dynamische Dichtheit. Durch die verringerte Dicke des Ringsteges 33 kann dabei der Innenringteil 32 in an sich bekannter Weise in verstärktem Maße die Dichtheitsfunktion wahrnehmen. Über die Durchlaßnuten 41 wird dabei der Einlass und der Auslass von Luft in den Gehäusespalt 19 ermöglicht, so dass die Gefahr eines Herausdrückens des Dichtungsring 27 aus dem Gehäusespalt 19 beim Schalten des Steuerschieber 14 verringert wird. Durch den über die Durchlaßnuten 41 sich im Gehäusespalt 19 aufbauenden Druck wird jeweils die zugeordnete Dichtlippe 38 an die entsprechende Seitenwand 21 bzw. 22 gedrückt, so dass eine einwandfreie Dichtheit unter Druck erreicht wird, wobei auch eine Abdichtung nach außen gewährleistet ist. Um zu erreichen, dass bei den beim Schalten des Wegeventils 10 auftretenden Druckunterschieden bzw. bei einem Unterdruck der Dichtring 27 nicht aus dem Gehäusespalt 19 herausgezogen wird, weist er am Außenringteil 31 die Rippen 36 auf, durch die er mit einer gewissen Vorspannung in dem Gehäuse 12 montiert ist. Durch diese Bauweise ist die Dichtungsanordnung 11 nach Art einer schwimmenden Lagerung im Gehäuse montiert, so dass sich der Dichtring 27 im Betrieb automatisch zum Kolbenabschnitt 24 zentriert. Auf diese Weise wird erreicht, dass die Anpressung des Dichtrings 27 am Kolbenabschnitt 24 über den ganzen Umfang gesehen möglichst gleich groß ist, und somit insgesamt ein Wegeventil 10 mit geringer Reibung des Steuerschiebers erzielbar ist. Geradheitsfehler im Steuerschieber oder im Gehäuse lassen sich auf diese Weise besonderes einfach und günstig ausgleichen. Es können daher auch Steuerschieber mit leicht gekrümmter Achse bzw. Steuerschieber mit geringer Konzentrizität der einzelnen Kolbenabschnitte zueinander ohne große Nachteile verwendet werden.

Die Dichtungsanordnung 11 ermöglicht eine platzsparende und kostengünstige Bauweise und ist zudem einfach montierbar; vorteilhaft läßt sie sich bei Mehr-Wegeventilen einsetzen, wie zum Beispiel in einem 5/2-Schaltventil, wo mehrere derartige Dichtungsanordnungen 11 in einem Gehäuse angeordnet werden.

Selbstverständlich sind an der gezeigten Ausführungsform Änderungen möglich, ohne vom Gedanken der Erfindung abzuweichen. So eignet sich diese Dichtungsanordnung auch für Steuerschieber mit unrundem Querschnitt, wie z.B. einem ovalen oder im Wesentlichen rechteckigen Querschnitt.

## Patentansprüche

1. Dichtungsanordnung für ein pneumatisches Wegeventil, in dessen Gehäuse ein Steuerschieber in einer Schieberbohrung axial gleitend geführt ist und die Verbindung zwischen mindestens zwei nebeneinander liegenden Kammern steuert, zwischen denen in einem quer zur Schieberbohrung verlaufenden Gehäusespalt mit gleichbleibender Spaltbreite die Dichtungsanordnung angeordnet ist, wobei die Dichtungsanordnung einen einteiligen Dichtring aufweist, bei dem ein Außenringteil über einen Ringsteg mit einem Innenringteil verbunden ist, wovon das Innenringteil dichtend mit einem Kolbenabschnitt des Steuerschiebers zusammenarbeitet,
**dadurch gekennzeichnet, dass**
der Dichtring (27) an seinem Außenumfang von einem Haltring (26) umgeben ist, der einen Teil der Dichtungsanordnung (11) bildet, und dass am Außenringteil (31) des Dichtrings (27) auf seiner dem Innenteil (32) zugewandten Seiten zu beiden Seiten des Ringstegs (33) jeweils eine schräg nach außen ragende Dichtlippe (38) so angeordnet ist, dass diese mit den zueinander parallelen Wänden (21, 22) des Gehäusespalts (19) zusammenarbeiten.

2. Dichtungsanordnungen nach Anspruch 1, **dadurch gekennzeichnet, dass** die Dichtungsanordnung (11) aus Dichtring (27) und diesen umgebenden Haltering (26) in dem Gehäusespalt (19) selbstzentrierend zum Steuerschieber (14) angeordnet ist.

3. Dichtungsanordnung nach Anspruch 1 oder 2, **dadurch gekennzeichnet, dass** der Dichtring (27) an seinem Außenringteil (31) im Bereich zwischen den Dichtlippen (38) und seiner äußeren Mantelfläche (34) an beiden Seitenflächen (40) jeweils eine vorspringende Rippe (36) aufweist, durch welche der Dichtring (27) in axialer Richtung des Steuerschiebers (14) im Gehäusespalt (19) vorgespannt ist.

4. Dichtungsanordnung nach einem der Ansprüche 1 - 3, **dadurch gekennzeichnet, dass** der Dichtring (27) an seinem Innenringteil (32) an dessen beiden Seitenwänden (39) längs des Umfangs verteilt mehrere Durchlaßnuten (41) aufweist.

5. Dichtungsanordnung nach einem der Ansprüche 1 - 4, **dadurch gekennzeichnet, dass** der Haltering (26) einen im Wesentlichen rechteckigen Querschnitt aufweist, und insbesondere eine zylindrische Bohrung (35) zur Aufnahme des Dichtrings (27) hat.

6. Dichtungsanordnung nach einem der Ansprüche 1 - 5, **dadurch gekennzeichnet, dass** der Haltering (26) aus formstabilem Material besteht und insbesondere mit Spiel im Gehäusespalt (19) geführt ist.

7. Dichtungsanordnung nach einem der Ansprüche 1 - 6, **dadurch gekennzeichnet, dass** das Außenringteil (31) im Wesentlichen einen trapezförmigen Querschnitt aufweist, dessen kürzere, parallele Trapezseite die Mantelfläche (34) bildet, während die längere parallele Trapezseite zwischen den Rippen (36) verläuft.

8. Dichtungsanordnung nach Anspruch 7, **dadurch gekennzeichnet, dass** von der langen Trapezseite im Bereich zwischen den Rippen (36) und dem Grund (37) des Ringsteges (33) die Dichtlippen (38) schräg abstehen.

9. Dichtungsanordnung nach einem der Ansprüche 6 - 7, **dadurch gekennzeichnet, dass** die Länge der Dichtlippen (38) im Wesentlichen der Dicke des Ringsteges (33) entspricht.

10. Dichtungsanordnung nach einem oder mehreren der Ansprüche 1 - 9, **dadurch gekennzeichnet, dass** das Innenringteil (32) im Wesentlichen einen runden Querschnitt aufweist und an seinem Innendurchmesser eine abgerundete, glatte Kontaktzone (42) zur Abdichtung mit dem Steuerschieber (14) hat.

11. Dichtungsanordnung nach einem der Ansprüche 1 - 10, **dadurch gekennzeichnet, dass** der Abstand zwischen den abgeflachten Seitenwänden (39)am Innenringteil (32) in dessen entspanntem Zustand gleich oder geringfügig kleiner ist als die axiale Dicke des Gehäusespalts (19) und im Wesentlichen gleich groß ist, wie die kurze parallele Trapezseite (34) des Außenringteils (31).

12. Dichtungsanordnung nach einem der Ansprüche 1 - 11, **dadurch gekennzeichnet, dass** sie bei einem 5/2-Wegeventil verwendet wird.

13. Dichtungsanordnung nach einem der Ansprüche 1 - 12, **dadurch gekennzeichnet, dass** der Dichtring (27) symmetrisch zu seiner Mittelebene ausgebildet ist.

14. Dichtungsanordnung nach einem oder mehreren der Ansprüche 1 - 13, **dadurch gekennzeichnet, dass** der quer zum Steuerschieber (14) verlaufende Gehäusespalt (19) im Gehäuse (12) eine Öffnung (23) bildet, über welche die Dichtungsanordnung (11) einbaubar ist.

15. Dichtungsanordnung nach einem der Ansprüche 1 - 14, **dadurch gekennzeichnet, dass** der Dichtring (27) kreisringförmig ausgeführt ist.

## Claims

1. A sealing arrangement for a pneumatic directional control valve, having in its housing a control slide axially sliding and guided in a slide bore which controls the communication between at least two adjacent chambers, between which said sealing arrangement is positioned in a housing gap in a transverse direction to the slide bore in an equidistant configuration, wherein the sealing arrangement includes a one-piece sealing ring having an outer ring portion connected to an inner ring portion via a ring web and wherein the inner ring portion cooperates in a sealing manner with a piston portion of the control slide,
**characterized in that**
said sealing ring (27) is surrounded at its outer periphery by a holding ring (26) which forms part of the sealing arrangement (11), and **in that** at the outer ring portion (31) of said sealing ring (27), on the sides facing the inner portion (32), on both sides of the ring web (33), a sealing lip (38) extending diagonally to the outside is positioned in such a way that it works together with the parallel walls (21, 22) of said housing gap (19).

2. The sealing arrangement according to claim 1, **characterized in that** said sealing arrangement (11), comprising said sealing ring (27) and said holding ring (26) surrounding the latter, is positioned in said housing gap (19) in a self-centering manner with respect to said control slide (14).

3. The sealing arrangement according to claim 1 or 2, **characterized in that** said sealing ring (27) has a rib (36) protruding at its outer ring portion (31) in the area between said sealing lips (38) and its outer circumferential surface (34) on the two lateral surfaces (40) serving to bias said sealing ring (27) in said housing gap (19) in an axial direction of said control slide (14).

4. The sealing arrangement according to any one of claims 1 to 3, **characterized in that** said sealing ring (27) has a plurality of grooved passages (41) on its inner ring portion (32) at its two lateral surfaces (39) spaced along the circumference.

5. The sealing arrangement according to any one of claims 1 to 4, **characterized in that** said holding ring (26) has an essentially rectangular cross-section and in particular a cylindrical bore (35) for receiving said sealing ring (27).

6. The sealing arrangement according to any one of claims 1 to 5, **characterized in that** said holding ring (26) is of a deformation-resistant material and is guided within said housing gap (19) with a certain amount of play.

7. The sealing arrangement according to any one of claims 1 to 6, **characterized in that** said outer ring portion (31) has an essentially trapezoid cross-section, of which the shorter parallel trapeze side forms the circumferential surface (34) while the longer parallel trapeze side extends between said ribs (36).

8. The sealing arrangement according to claim 7, **characterized in that** said sealing lips (38) diagonally extend from the longer trapeze side in the area between said ribs (36) and the bottom (37) of said ring web (33).

9. The sealing arrangement according to any one of claims 6 to 7, **characterized in that** the length of said sealing lips (38) essentially corresponds to the thickness of said ring web (33).

10. The sealing arrangement according to any one or more of claims 1 to 9, **characterized in that** the inner ring portion (32) has an essentially round cross-section and has at its inner diameter a rounded, smooth contact zone (42) for sealing against the control slide (14).

11. The sealing arrangement according to any one of claims 1 to 10, **characterized in that** the distance between the flattened side surfaces (39) at the inner ring portion (32) in its relaxed state is equal to or marginally smaller than the axial width of the housing gap (19), and has essentially the same size as the short parallel trapeze side (34) of the outer ring portion (31 ).

12. The sealing arrangement according to any one of claims 1 to 11, **characterized in that** it is used in a 5/2 directional valve.

13. The sealing arrangement according to any one of claims 1 to 12, **characterized in that** said sealing ring (27) is configured symmetrically about its centre axis.

14. The sealing arrangement according to any one or more of claims 1 to 13, **characterized in that** said housing gap (19) extending in a transverse direction to the control slide (14) forms an opening (23) in said housing (12) through which the sealing arrangement (11) may be inserted.

15. The sealing arrangement according to any one of claims 1 to 14, **characterized in that** said sealing ring (27) has a circular configuration.

## Revendications

1. Agencement d'étanchéité pour un distributeur pneumatique, dans le boîtier duquel un tiroir de commande est guidé en coulissement axial dans un perçage à tiroir et contrôle la liaison entre au moins deux chambres situées l'une à côté de l'autre entre lesquelles est agencé l'agencement d'étanchéité dans un intervalle de boîtier s'étendant transversalement au perçage à tiroir et présentant une largeur d'intervalle constante, l'agencement d'étanchéité comprenant une bague d'étanchéité d'un seul tenant dans laquelle une partie extérieure de la bague est reliée à une partie intérieure de la bague via une barrette de bague, la partie intérieure de bague coopérant avec étanchement avec un tronçon de piston du tiroir de commande,
**caractérisé en ce que**
la bague d'étanchéité (27) est entourée à sa périphérie extérieure par une bague de retenue (26) qui forme une partie de l'agencement d'étanchéité (11), et **en ce que** des lèvres d'étanchement respectives (38) dépassant de part et d'autre de la barrette de bague (33) en oblique vers l'extérieur sont agencées sur la partie extérieure (31) de la bague d'étanchéité (27) sur son côté tourné vers la partie intérieure (32), de telle sorte que lesdites lèvres coopèrent avec les parois (21, 22) mutuellement parallèles de l'intervalle de boîtier (19).

2. Agencement d'étanchéité selon la revendication 1, **caractérisé en ce que** l'agencement d'étanchéité (11) constitué par la bague d'étanchéité (27) et par la bague de retenue (26) qui l'entoure est disposé dans l'intervalle de boîtier (19) avec auto-centrage par rapport au tiroir de commande (14).

3. Agencement d'étanchéité selon l'une ou l'autre des revendications 1 et 2, **caractérisé en ce que** la bague d'étanchéité (27) comprend sur sa partie extérieure (31), dans la zone entre les lèvres d'étanchement (38) et sa surface enveloppe extérieure (34), sur les deux surfaces latérales (40), respectivement des nervures saillantes (36) par lesquelles la bague d'étanchéité (27) est précontrainte en direction axiale du tiroir de commande (14) dans l'intervalle de boîtier (19).

4. Agencement d'étanchéité selon l'une des revendications 1 à 3, **caractérisé en ce que** la bague d'étanchéité (27) comprend sur sa partie intérieure (32), sur ses deux parois latérales (39), plusieurs gorges de passage (41) réparties le long de la périphérie.

5. Agencement d'étanchéité selon l'une des revendications 1 à 4, **caractérisé en ce que** la bague de retenue (26) présente une section transversale sensiblement rectangulaire et possède en particulier un perçage cylindrique (35) pour recevoir la bague d'étanchéité (27).

6. Agencement d'étanchéité selon l'une des revendications 1 à 5, **caractérisé en ce que** la bague de retenue (26) est constituée en matériau solide en forme et est guidée en particulier avec jeu dans l'intervalle de boîtier (19).

7. Agencement d'étanchéité selon l'une des revendications 1 à 6, **caractérisé en ce que** la partie extérieure (31) présente une section transversale sensiblement trapézoïdale dont le côté parallèle plus court du trapèze forme la surface enveloppe (34), tandis que le côté parallèle plus long du trapèze s'étend entre les nervures (36).

8. Agencement d'étanchéité selon la revendication 7, **caractérisé en ce que** les lèvres d'étanchement (38) font saillie en oblique depuis le côté long du trapèze dans la zone entre les nervures (36) et le fond (37) de la barrette de bague (33).

9. Agencement d'étanchéité selon l'une ou l'autre des revendications 6 et 7, **caractérisé en ce que** la longueur des lèvres d'étanchement (38) correspond sensiblement à l'épaisseur de la barrette de bague (33).

10. Agencement d'étanchéité selon l'une ou plusieurs des revendications 1 à 9, **caractérisé en ce que** la partie intérieure (32) de la bague présente une section transversale sensiblement circulaire et possède sur son diamètre intérieur une zone de contact arrondie lisse (42) pour l'étanchement avec le tiroir de commande (14).

11. Agencement d'étanchéité selon l'une des revendications 1 à 10, **caractérisé en ce que** la distance entre les parois latérales aplaties (39) sur la partie intérieure (32) de la bague est, dans son état détendu, égale ou légèrement inférieure à l'épaisseur axiale de l'intervalle de boîtier (19) et est sensiblement égale à la longueur du côté parallèle court (34) du trapèze de la partie extérieure (31) de la bague.

12. Agencement d'étanchéité selon l'une des revendications 1 à 11, **caractérisé en ce qu'**il est utilisé dans un distributeur à 5 voies/2 positions.

13. Agencement d'étanchéité selon l'une des revendications 1 à 12, **caractérisé en ce que** la bague d'étanchéité (27) est réalisée de façon symétrique à son plan médian.

14. Agencement d'étanchéité selon l'une ou plusieurs des revendications 1 à 13, **caractérisé en ce que** l'intervalle de boîtier (19) s'étendant transversalement au tiroir de commande (14) forme une ouverture (23) dans le boîtier (12), à travers laquelle peut être monté l'agencement d'étanchéité (11).

15. Agencement d'étanchéité selon l'une des revendications 1 à 14, **caractérisé en ce que** la bague d'étanchéité (27) est réalisée en forme de bague circulaire.
